# EUROPEAN PATENT SPECIFICATION

(11) **EP 2 451 661 B1**
(45) Date of publication and mention of the grant of the patent: **25.11.2015**
(21) Application number: 10765932.8
(22) Date of filing: 09.07.2010
(51) Int. Cl.: B60G 11/16

(54) **SUSPENSION OF VEHICLE WHEEL, ESPECIALLY OF VEHICLE FOR ROUGH TERRAIN DRIVING**
AUFHÄNGUNG FÜR EIN FAHRZEUGRAD, SPEZIELL FÜR EIN FAHRZEUG FÜR RAUES TERRAIN
SUSPENSION DE ROUE DE VEHICULE, EN PARTICULIER DE VEHICULE DESTINÉ À LA CONDUITE SUR UN TERRAIN ACCIDENTÉ

(30) Priority: 09.07.2009 CZ 20090440
(43) Date of publication of application: 16.05.2012
(73) Proprietor: Technicka Univerzita v Liberci, 461 17 Liberec (CZ)
(72) Inventor: SIR, Miroslav, 46010 Liberec (CZ)
(74) Representative: Musil, Dobroslav
(86) International application number: PCT/CZ2010/000076
(87) International publication number: WO 2011/003371

(56) References cited:
- DE-A1- 19 853 642
- DE-U1- 20 209 120
- GB-A- 132 310
- US-A- 1 290 293
- US-A- 2 993 705
- US-A- 3 721 457
- US-A- 6 142 495
- US-A1- 2003 122 341

## Description

### Technical field

The invention relates to the suspension of vehicle wheel, especially of vehicle for rough terrain driving, comprising basic member formed by a part of a vehicle chassis, swinging moveable member formed by a body or a lower arm of the suspension of the wheel, and a helical spring.

### Background art

The wheels of wheeled vehicles are towards the vehicle chassis mounted on suspensions, whose task is to provide for the vehicle towards the driving surface a support, which enables a springy and simultaneously damped mounting of the spring loaded section of the vehicle towards the terrain, and as regards the driving wheel, it secures transmission of the driving force to the driving surface.

Each suspension is formed of a kinematic system of rigid bodies, which ensures a definite guidance of the wheel towards the vehicle chassis, and of springy and damping means, which ensure a dynamic transmission of force reaction being induced between the driving surface and the travelling wheel on the vehicle chassis. There exists a great number of kinematic schemes in suspension of wheels. The currently used suspensions, for example the parallelogram, trapezoidal, telescopic (McPherson), pendulous, crank, angle, are characterized by both positive and negative specific characteristics. The basic requirement is the minimum change in geometry of undercarriage at springing action, i.e. at deflection of suspension from the nominal position. These are mostly the changes in wheel gauge and in wheel base and the change in position of the side plane of the wheel with respect to the vertical longitudinal symmetry plane of vehicle.

At vehicles designated for driving on roads the change of these parameters is small, which is given by low values of expected springing action. Minor driving surface irregularity does not required application of springy and damping means featuring great travels, while the extreme positions of suspensions towards the vehicle chassis are then defined by means of bump stops.

Other situation is at vehicles destined for operation outside the roads in a free terrain, where a great travel in suspension is one of the basic required characteristics of the vehicle undercarriage. Geometry of kinematic arrangements of the known types of suspensions by itself enables the great travel without problems. The limiting elements in this section of undercarriage is the spring of suspension and shock absorber of suspension, quite frequently these means are being integrated into the springy and damping unit.

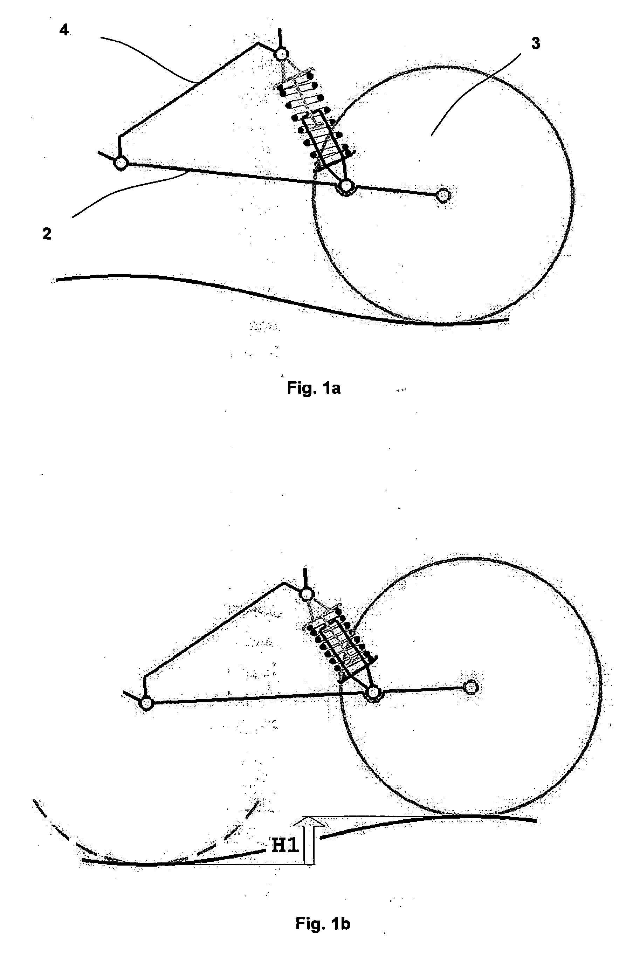

Extreme positions of the axle are illustrated on an example of the crank suspension of the rear rigid axle being suspended by means of a central springy and damping unit mounted in vertical longitudinal symmetry plane of a terrain vehicle (Fig. 1a, 1b). It is apparent that the working travel of the spring being limited by its extreme positions is very short by which it restricts the wheel travel. Such arrangement is practically not applicable for an off-road vehicle.

In principle, the background art uses two solutions of this problem.

The first design at the same positioning of the lower end of the springy and damping unit on the crank of the suspension utilises a long spring with a greater number of coils. Having not changed diameter of the wire and the spring, its rigidity is reduced which at the same time enables a greater travel. Nevertheless the long spring is unstable in side direction, which complicates the stress of material and reduces the spring life. Simultaneously, mounting of an upper end of the long springy and damping unit causes the structural problems from the point of view of requirements as to space.

The second solution utilises a short spring. In this case it is necessary to transfer the connection of the lower end of the springy and damping unit to the crank of the suspension closer to axis of crank swinging. In this case the stress of the spring increases substantially, therefore the spring must be made of a thicker wire. High rigidity of the spring increases bending stress of the crank, which must be more dimensioned. Through this the unsprung mass of axle is increased with all negative consequences as to controlling comfort. None of these solution remedies the basic problem, which is the loss of adhesion and thus loss of the propulsive effect of the axle in area of maximum length of springy and damping unit, when the force produced by the spring is the smallest. On the contrary, in the area of minimum length of the springy and damping unit the forces transferred into the structure of vehicle are extremely great and require a huge dimensioning of the adjacent parts of vehicle.

A suspension according the the preamble of claim 1 is known from US-A-6142495.

The goal of the invention is to eliminate or at least reduce shortcomings of the background art, first of all through the structural arrangement to better use the possibilities, which are provided by the spring for springing of a vehicle.

### Principle of the invention

The goal of the invention has been achieved by the suspension of vehicle wheel comprising the helical spring, whose principle consists in that, comprises a rolling kinematic couple, whose swinging controlled member is formed by a rack or a rope or a belt or a roller chain whose rolling surface is engages with convex rolling surface of controlling member of rolling kinematic couple, which is mounted on the basis member (4) of suspension of the wheel, whereas one end of the spring is coupled with moveable member of the wheel suspension, and the second end of the spring is coupled with the controlled member of rolling kinematic couple.

The moveable member is for example the crank of the crank suspension or the lower arm of parallelogram suspension, whereas the basic member, as a rule, is connected with the vehicle chassis. This arrangement simplifies the structure of the moveable member, at the same time mounting of the controlling member of the rolling kinematic couple on the basic member, which in this case is substantially immovable, is simple as well.

The controlling member of the rolling kinematic couple is on the basic member of the wheel suspension mounted in a fixed manner, which is simple from the design point of view.

The controlling member of the rolling kinematic couple in an alternative embodiment is on the basic member mounted in a moving manner, through which a greater travel of wheel with respect to the vehicle chassis is achieved.

In case of moveable mounted controlling member of the rolling kinematic couple it is advantageous, if this controlling member is coupled with another member of the wheel suspension to derive its motion with respect to the member of the suspension, on which the controlling member is mounted. It is especially advantageous, if for this purpose it is coupled with individual propulsion. Through a controlled motion of the controlling member of the rolling kinematic couple there may be achieved an optimum course of spring compression, by means of which either the vehicle spring suspension for various types of driving surfaces may be adjusted, or continuously during driving the sprung parts of vehicle may be maintained in the desired stabilised position.

Preferably, in the sophisticated embodiment, the individual propulsion serving to derive motion of the controlling member of the rolling kinematic couple is controlled by a system of automatic control of stabilised position of the vehicle parts coupled with the basic member. This enables to maintain a stable, usually horizontal position of the vehicle chassis.

The controlled member of the rolling kinematic couple is a rack bar, whose rolling surface engages with convex rolling surface of the controlling member of the rolling kinematic couple, whereas the convex rolling surface is a toothed one. In this case the controlling member is the tooth wheel or at least its segment.

It is also preferred, if the controlled member of the rolling kinematic couple is a rope or a belt or a roller chain, whose rolling surface engages with convex rolling surface of the controlling member of the rolling kinematic couple, while the shape of surface respective to the convex rolling surface corresponds to the shape of surface of the corresponding rolling surface of the flexible controlled member, and the flexible controlled member is attached with its end to the convex rolling surface of the controlling member.

At motion of the moveable member of suspension with respect to the member on which it is mounted, the flexible member is being wound on the convex rolling surface of the controlling member, which reduces demand as to installation space of the suspension.

It is also preferred, when a mutual tangent position of the rolling surface of the controlled member of the rolling kinematic couple and the convex rolling surface of the controlling member of the rolling kinematic couple is ensured through a linear guidance. This, especially in some embodiments enables geometrically perfect engagement of the controlling and controlled member of the rolling kinematic couple.

The principle advantage of the solution according to the invention is increase in travel of the vehicle wheel while preserving the adhesion without increasing the structural length of the spring due to interaction of members of wheel suspension mechanism with the rolling kinematic couple. Through a suitable shaping and propulsion of the controlling member of the rolling kinematic couple the controlled compression of the spring may be secured, and thus also a controlled course in characteristics of great travel of the suspended wheel at driving over a rough terrain. In most embodiments the suspension is of a compact, technologically advantageous shape with minimum demand as to installation space and the forces through which the suspension acts towards the vehicle chassis are concentrated into sufficiently dimensioned parts of vehicle.

### Description of the drawing

Exemplary embodiments of arrangement of the vehicle wheel suspension and its springing are schematically represented in the drawing where the figures "a" represent the suspension position before the wheel drives over the elevation of the driving surface, and the figures "b" position of suspension at the moment when the wheel is on elevation of the driving surface, whereas the travel of the driving wheel is marked in compliance with numbers of figures "H1" to "H7". The Fig. 1 represents the structure of a crank suspension according to the background art, further figures represent an alternative embodiment according to the invention, where the Fig. 2 represents the crank suspension with the springy and damping unit coupled with the rack (toothed bar) in a function of controlled member of the rolling kinematic couple and the non-moveable toothed segment in the function of controlling member of the rolling kinematic couple, the Fig. 3 the crank suspension with the springy and damping unit coupled with the rack and the moveable toothed segment, the Fig. 4 the parallelogram suspension with springy and damping unit coupled with the rack and the immovable toothed segment, the Fig. 5 suspension of McPherson axle with springy unit coupled with one end of the flexible controlled member of the rolling kinematic couple, whose second end is attached to a cylindrical rolling surface of the controlling member of the rolling kinematic couple, on which it is being wound during springing, and the Fig. 6 represents the parallelogram suspension with the springy and damping unit coupled with the rack and the moveable toothed segment mounted on the basic member outside the swing axis of suspension arms.

### Examples of embodiment

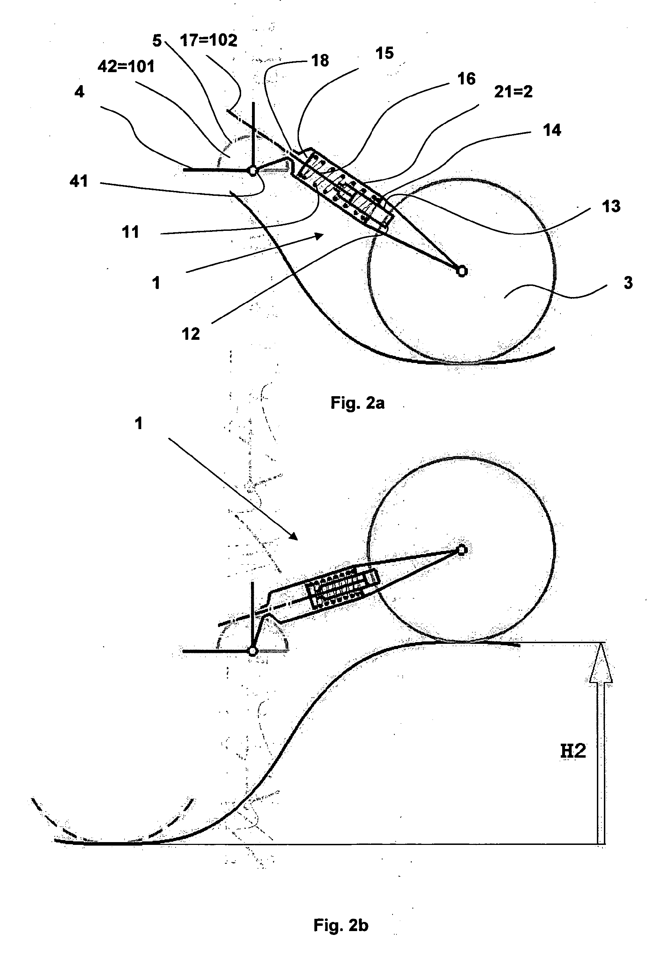

The Fig. 2a, 2b show an exemplary embodiment of invention for the crank suspension of a rear rigid axle of an off-road vehicle, ATV quadricycle or for suspension of a rear wheel for terrain motorcycle.

The spring-loaded crank suspension **1** comprises the moveable member **2** formed of body **21**, which on one of its end carries the shaft of controlling wheel **3** and with its second end it is mounted on the basic member **4** in a swinging manner around axis **41**. Inside the body **21** there is mounted the springy and damping unit formed of compression helical spring **11** and of fluid shock absorber **12** arranged axially with the spring **11**, while the cylinder **13** of the fluid shock absorber **12** is connected with the body **21**. The compression helical spring **11** with its end adjacent to the wheel **3** is resting against the fixed support **14** attached in the body **21** of the spring-loaded crank suspension **1**. The second end of the spring **11** is in contact with the shifting support **15** in a fixed manner connected with the piston rod **16** of the fluid shock absorber **12**, which is in a fixed manner connected with the rack **17** in a sliding manner mounted in the linear guidance **18** in the body **21** of the spring-loaded crank suspension **1**. On the basic member **4** in a fixed manner is mounted the gear segment **42**, whose axis is identical with the axis **41** of the swinging motion of the body **21** towards the basic member **4**. The rack **17** engages with its gearing with gearing of the gear segment **42**.

The gear segment **42** functioning as the controlling member **101** and the rack **17** functioning as the controlled member **102** form the rolling kinematic couple, whereas the gearing of the segment **42** represents its convex rolling surface **5**.

In position of the wheel **3** before a protruding terrain unevenness the spring **11** is of maximum or nearly maximum length, and the shifting support **15** together with the piston rod **16** of fluid shock absorber **12** and the rack **17** in the body **21** is in vicinity of the extreme position on the side adjacent to the basic member **4**. Upon driving of the wheel **3** up a bump having height **H2**, the wheel **3** due to generated reaction force is pressed in direction upwards and it performs a vertical travel **H2** with respect to the basic member **4**. At the same time the rack **17** rolls along the gear segment **42** and simultaneously inserts the piston rod **16** of the fluid shock absorber **12** into cylinder **13** of the fluid shock absorber **12** and by means of the shifting support **15** compresses the spring **11**. The force of the spring **11** is being increased till the moment of balance in dynamic force of the body **21**. The dependence of force of the spring **11** on an angle position of the body **21** of the spring-loaded crank suspension **1** forming the crank of the suspension is uniquely given by characteristic of the spring **11** and by kinematic dependence of axial position of the rack **17** on the angle position of the body **21**. This dependence may be determined from transmission of the rolling kinematic couple, whose controlling member **101** is the gear segment **42** and the controlled member **102** is the rack **17**.

In the not represented embodiment the gear segment **42** and the rack **17** may be superseded by a segment of chain wheel and two-way load carrying chain, whereas the linear guidance **18** is modified in appropriate manner. With its free end the chain is attached to the segment of a chain wheel, with its convex rolling surface it engages. Advantage of this alternative consists in that, the chain is partially wound on circumference of the chain segment and the solution does not require space in the basic member **4**, into which in the represented embodiment extends the end of the rack **17**.

At the same compression of springs of the springy and damping unit are achieved the travels **H1**, **H2** of the wheel **3** initiated by various heights of unevenness of the driving surface. Comparison of embodiment according to the background art (travel **H1**, Fig. 1a, 1b) and embodiment according to the invention (for example travel **H2**, Fig. 2a, 2b) indicates an obvious advantage of the new solution. A higher travel **H2** of the wheel **3** is achieved, without necessity to install an inadequate long spring between the moveable member **2** formed of a crank of the suspension and the basic member **4**.

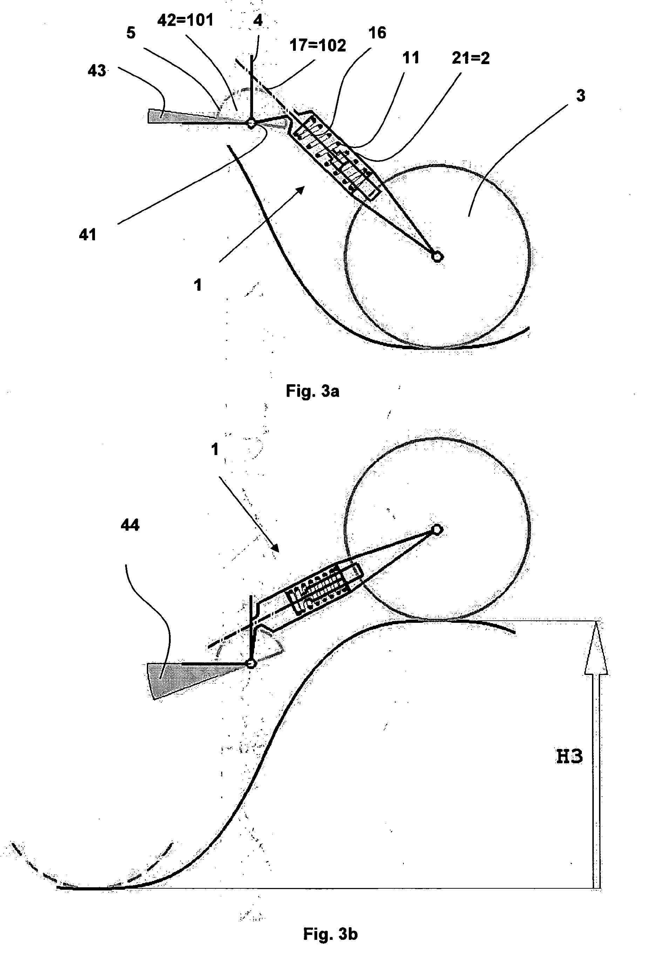

Arrangement represented in the Fig. 3a, 3b is a modification of the described embodiment. The gear segment **42** of the controlling member **101** is here mounted rotatably around the axis **41** of swinging mounting of the body **21** of the moveable member **2** on the basic member **4** and it may turn e.g. within the range given by the total sum of dark sectors **43**, **44** represented in the drawings. Upon driving of the wheel **3** onto elevation the gear segment **42** shall compulsory turn in the same direction as the body **21** creating the moveable member **2** of the spring-loaded crank suspension **1**, by which at the same compression of the spring **11** the travel **H3** of the wheel **3** being higher than the travel **H2** from the Fig. 2b shall be achieved. This motion of the gear segment **42** may be coupled in a not represented manner with an angle travel of the body **21** of the spring-loaded crank suspension **1** with respect to the basic member **4**, or it may be generated by the not represented individual motoric propulsion. In a more advanced embodiment this propulsion is controlled by the not represented automatic control system of stabilised position of the basic member **4**.

Also in this embodiment the gear segment **42** exerts the function of controlling member **101** and the rack **17** the function of controlled member **102** of the rolling kinematic couple, while gearing of the segment **42** represents its convex rolling surface **5**.

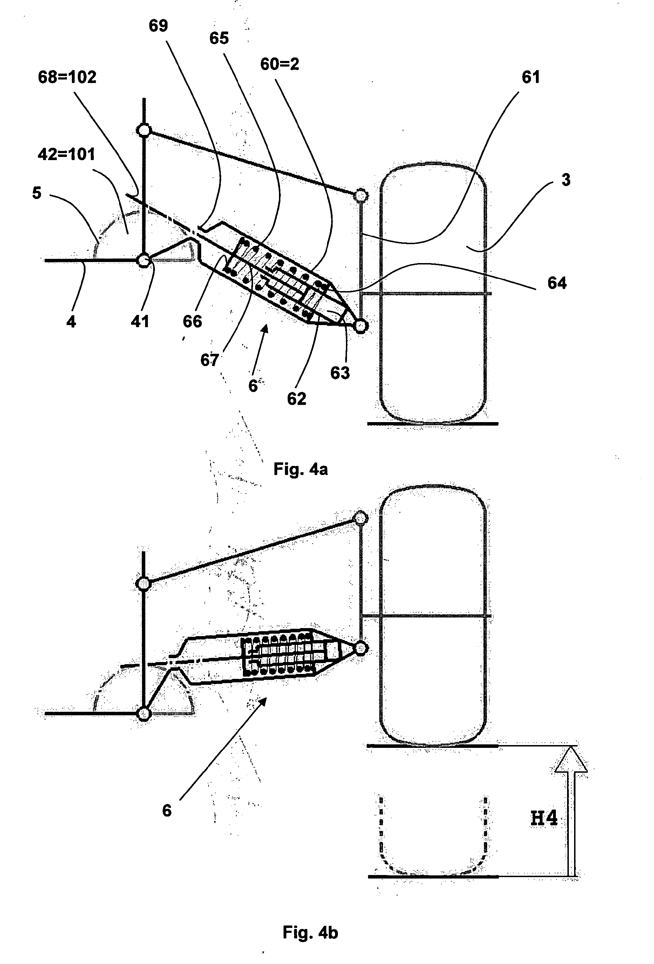

Applicability of this invention is not limited to cranked suspensions of the driving wheels only. The Fig. 4a, 4b represents an alternative of the parallelogram suspension **6**, whose lower spring-loaded arm is a moveable member **2** of suspension mechanism, which corresponds to the above described spring-loaded crank suspension **1**. The moveable member **2** is formed of a body **60**, which by its one end is connected in articulated manner to the pitman **61**, which carries the wheel **3** and its accessories. By its second end the body **60** is in articulated manner connected to the basic member **4**. Inside the body **60** with it there is connected the cylinder **62** of the fluid shock absorber **63** and the fixed support **64**, against which there is resting one end of the compression helical spring **65** arranged axially with the cylinder **62** of the fluid shock absorber **63**. The second end of the spring **65** is in contact with the shifting support **66** being in a fixed manner connected with the piston rod **67** of the fluid shock absorber **63**. The piston rod **67** of the fluid shock absorber **63** is in a fixed manner connected with the rack **68** of the controlled member **102** being in a shifting manner mounted in the linear guidance **69** in the body **60** of lower spring-loaded arm. On the basic member **4** in the rotation axis **41** of swinging mounting of the body **60** of the moveable member **2** there is mounted the fixed, possibly rotating gear segment **42** of the controlling member **101**, with its gearing the rack **68** is in engagement.

Functioning of embodiment according to the Fig. 4a, 4b corresponds to the above mentioned described device represented in the Fig. 2a, 2b for the immovable gear segment **42**, and in the Fig. 3a, 3b for the moveable gear segment **42**. The gear segment **42** as a controlling member **101** and the rack **68** as a controlled member **102** create the rolling kinematic couple, whereas the gearing of the segment **42** is its convex rolling surface **5**.

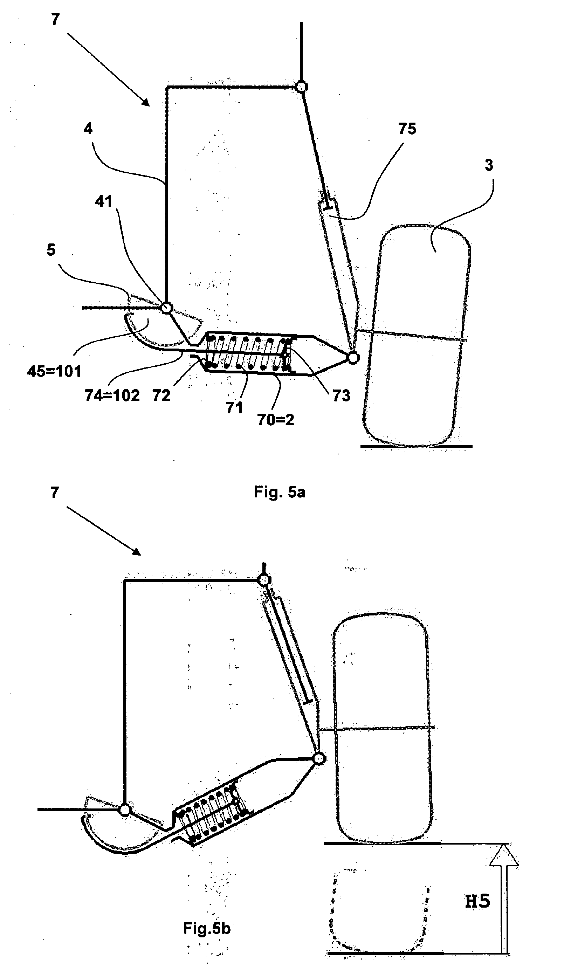

The Fig. 5a, 5b represents an exemplary embodiment of the invention with the suspension **7** of McPherson type with lower spring-loaded arm **2** formed of the body **70**, in which there is positioned the compression helical spring **71** resting with its end adjacent to the basic member **4** against the fixed through support **72**. The second end of the compression helical spring **71**, adjacent to the wheel **3**, is in contact with the shifting support **73**, to which there is with its one end attached the rope **74**, passing through the cavity of the compression helical spring **71**. With its second end the rope **74** is attached to a cylindrical rolling surface **5** of the segment **45**, on which upon motion of the wheel **3** upwards it is being wound.

The segment **45** here fulfils function of the controlling member **101** of the rolling kinematic couple, and the rope **74** fulfils function of the controlled member **102** of the rolling kinematic couple, while the cylindrical surface of the segment **45** is the convex rolling surface **5**.

The segment **45** is firmly connected with the basic member **4**. Damping of suspension motion during springing in this embodiment is secured by means of the fluid shock absorber **75**, which is an individual member of the suspension mechanism **7**. In the given case the fluid shock absorber **75** must be relatively long, so as to cover the whole range **H5** of axle travel, which enables the lower spring-loaded arm.

In the not represented embodiment instead of the compression helical spring **71** the draw helical spring is used, which with the end adjacent to the wheel **3** is attached to the body **70** of lower spring-loaded arm and with the second end directly to the rope **74** of the controlled member **102**, which is being wound on the continual convex rolling surface of the segment **45** of the controlling member **101**.

In alternative embodiments of the rolling kinematic couple as a flexible controlled member **102** the roller chain, or flat belt, vee-belt or toothed belt is used. Segment **45** of the controlling member **101** is then provided with respective convex rolling surface **5** formed of rolling surface of the chain wheel, or of rolling surface of the flat, v-belt or toothed pulley. Segment **45** may be mounted on the basic member **4** rotatably with forced rotation motion, similarly as at the embodiments represented in the Fig. 3a, 3b, 4a, 4b.

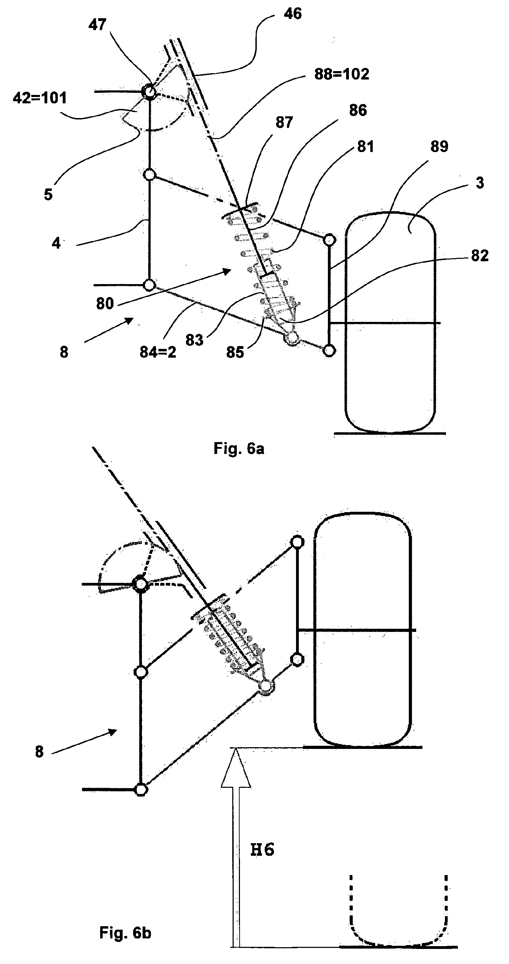

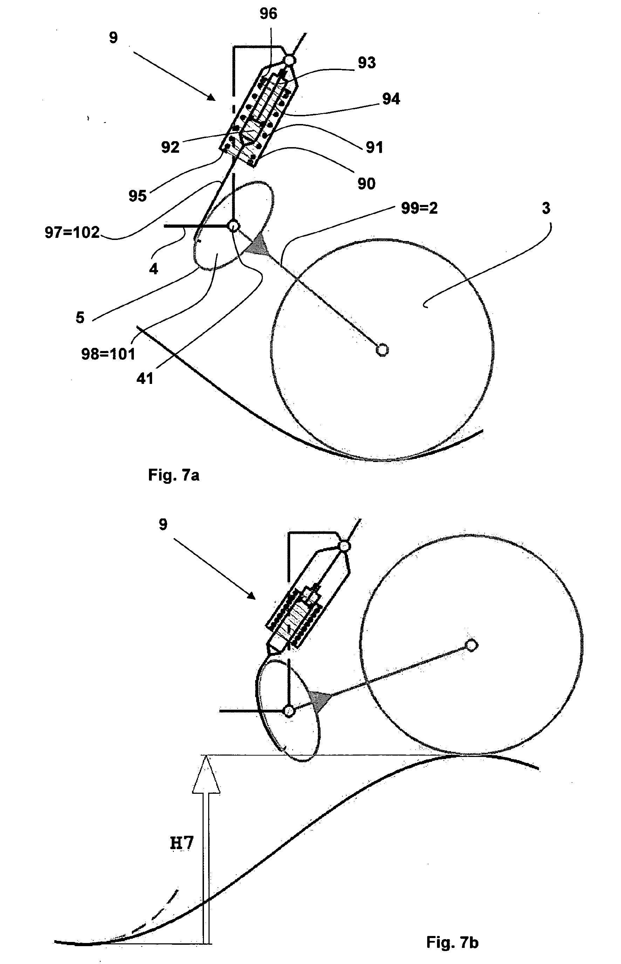

The parallelogram suspension **8** of the wheel **3** represented in the Fig. 6a, 6b is another alternative of embodiment according to the invention. Here, the springy and damping unit **80** is not directly a member of kinematic mechanism of the suspension **8**, but it is arranged separately. The springy and damping unit **80** comprises the compression helical spring **81**, inside of which there is arranged the fluid shock absorber **82**. In exemplary embodiment the cylinder **83** of the fluid shock absorber **82** with its blind end is in articulated manner connected with the lower arm **84** of the parallelogram suspension **8** of the wheel **3**. On cylinder **83** of the fluid shock absorber **82** the fixed support **85** of the spring **81** is attached. Piston rod **86** of the fluid shock absorber **82** is firmly connected with the shifting support **87** of the spring **81** and its extended section creates the rack **88** of controlled member **102** of the rolling kinematic couple. The compression helical spring **81** is inserted between the fixed support **85** and the shifting support **87**. The rack **88** engages with gearing of the gear segment **42** of controlling member **101** of the rolling kinematic couple being mounted rotatably or in the not represented embodiment in a fixed manner, on the basic member **4**. The tangential position of the rack **88** towards the gear segment **42** is ensured by means of the linear guidance **46**, which is mounted rotatably on the basic member **4** axially with swinging axis **47** of the gear segment **42**.

Here, the controlling member **101** of the rolling kinematic couple is represented by the gear segment **42**, and the controlled member **102** of the rolling kinematic couple is represented by the rack **88**, while the convex rolling surface **5** is formed of the rolling surface of gearing of the segment **42**.

Alternatively, the blind end of the cylinder **83** of the fluid shock absorber **82** instead of with the lower arm **84** of the suspension **8** may be connected, in the not represented manner, for example with the pitman **89** of parallelogram suspension **8** of the wheel **3**.

In alternative embodiments of the rolling kinematic couple is used as a controlled member **102** the roller chain, or flat belt, vee-belt or toothed belt. The controlling member **101** is after then provided with a respective convex rolling surface **5** formed of a rolling surface of the chain wheel, or of a rolling surface of the flat, vee-belt or toothed pulley.

The advantage of wheel suspensions **3** of a vehicle for driving in a rough terrain in embodiments **1**, **6**, **7**, **8** according to the invention consists in that it enables a great vertical travel of driving wheels of a vehicle at its driving in terrain, while relatively short springs of spring suspension of vehicle may be used. This reduces the demand as to the space at installation of suspension, while the forces transferred from the suspension into the basic member **4** are acting in places which are sufficiently dimensioned.

Through a suitable shaping of the convex rolling surface **5** on the controlling member **101** of rolling kinematic couple, the travel characteristics of vehicle spring suspension may be affected positively in a broad range.

If the controlling member **101** of the kinematic couple provided with a convex rolling surface **5** is equipped with own propulsion, it may be with advantage used as an active member of automatic stability controlling system of the basic member **4** of vehicle and the connected super-structures.

The technological point of view is important as well. The suspensions of vehicle wheels, in embodiment according to the invention mostly create compact installation assemblies, which are installed into a vehicle at simultaneous saving of installation time.

### List of referential markings

- 1: suspension (crank)
- 11: compression helical spring
- 12: fluid shock absorber
- 13: cylinder (of fluid shock absorber)
- 14: fixed support (of spring)
- 15: shifting support (of spring)
- 16: piston rod (of fluid shock absorber)
- 17: rack (of controlled member)
- 18: linear guidance
- 2: moveable member of suspension mechanism
- 21: body
- 3: controlling wheel
- 4: basic member of suspension mechanism
- 41: swinging axis (of moveable member of suspension mechanism)
- 42: gear segment (of controlling member)
- 43: sector showing the range of motion
- 44: sector showing the range of motion
- 45: segment (smooth)
- 46: linear guidance (of rack)
- 47: swinging axis (of gear segment)
- 5: convex rolling surface
- 6: suspension (parallelogram with springy and damping unit integrated in lower arm)
- 60: body (of moveable member)
- 61: pitman (of parallelogram wheel suspension)
- 62: cylinder (of fluid shock absorber)
- 63: fluid shock absorber
- 64: fixed support of spring
- 65: compression helical spring
- 66: shifting support of spring
- 67: piston rod (of fluid shock absorber)
- 68: rack (of controlled member)
- 69: linear guidance
- 7: suspension (of McPherson type)
- 70: body (of moveable member)
- 71: compression helicalspring
- 72: fixed support of spring
- 73: shifting support of spring
- 74: rope
- 75: fluid shock absorber (independent)
- 8: suspension (parallelogram)
- 80: springy and damping unit
- 81: compression helicalspring
- 82: fluid shock absorber
- 83: cylinder (of fluid shock absorber)
- 84: lower arm of parallelogram suspension
- 85: fixed support of spring
- 86: piston rod (of fluid shock absorber)
- 87: shifting support of spring
- 88: rack (of controlled member)
- 89: pitman (of parallelogram wheel suspension)
- 101: controlling member (of rolling kinematic couple)
- 102: controlled member (of rolling kinematic couple)
- H1-H7: travel (of driving wheel)

## Claims

1. Suspension (1, 6, 7, 8) of the wheel (3) of a vehicle, especially of a vehicle for rough terrain driving, comprising a basic member (4) formed by a part of a vehicle chassis, a swinging moveable member (2) formed by a body (21, 60) or a lower arm (84) of the suspension (1, 6, 8) of the wheel (3), and a helical spring (11, 65, 71, 81), **characterised in that** the suspension comprises a rolling kinematic couple, whose controlled member (102) is formed by a rack (17, 68, 102) or a rope or a belt or a roller chain (74) whose rolling surface engages with the convex rolling surface (5) of a controlling member (101) of the rolling kinematic couple, which is mounted on the basic member (4) of the suspension (1, 6, 7, 8) of the wheel (3), whereas one end of the spring (11, 65, 71, 81) is coupled with the moveable member (2) of the suspension (1, 6, 7, 8) of the wheel (3), and the second end of the spring (11, 65, 71, 81) is coupled with the controlled member (102) of the rolling kinematic couple.

2. Suspension according to the claim 1, **characterised in that**, the controlling member (101) of the rolling kinematic couple on the basic member (4) of suspension is mounted in a fixed manner.

3. Suspension according to the claim 1, **characterised in that**, the controlling member (101) of the rolling kinematic couple on the basic member (4) of suspension is mounted in a moveable manner.

4. Suspension according to the claim 3, **characterised in that**, the controlling member (101) of rolling kinematic couple is coupled with another member of the suspension (1, 6, 7, 8, 9) of the wheel (3) for generating its motion with respect to the basic member (4) of suspension, on which the controlling member (101) is mounted.

5. Suspension according to the claim 3, **characterised in that**, the controlling member (101) of rolling kinematic couple is coupled with individual propulsion serving to generate its motion with respect to the basic member (4) of the suspension, on which the controlling member (101) is mounted.

6. Suspension according to the claim 5, **characterised in that**, the individual propulsion serving to generate motion of the controlling member (101) of rolling kinematic couple is controlled by a system of automatic control of stabilised position of vehicle parts coupled with the basic member (4).

7. Suspension according to any of the claims 1 to 6, **characterised in that**, the controlled member (102) of rolling kinematic couple is the rack (17, 68, 88), whose rolling surface engages with convex rolling surface (5) of the controlling member (101) of rolling kinematic couple, while the convex rolling surface (5) is a toothed one.

8. Suspension according to any of the claims 1 to 6, **characterised in that**, the controlled member (102) of rolling kinematic couple is a rope or a belt or a roller chain (74), whose rolling surface engages with convex rolling surface (5) of the controlling member (101) of rolling kinematic couple, while the surface shape corresponding to the convex rolling surface (5) corresponds to the surface shape corresponding to the rolling surface of flexible member (74) and the flexible member (74) with its end is attached to the convex rolling surface (5) of the controlling member (101).

9. Suspension according to the claim 7 or 8, **characterised in that**, the mutual tangent the position of rolling surface of the controlled member (102) of rolling kinematic couple and of convex rolling surface (5) of the controlling member (101) of rolling kinematic couple is secured through the linear guidance (18, 46, 69).

## Patentansprüche

1. Aufhängung (1, 6, 7, 8) des Rades (3) des Fahrzeuges, insbesondere des Fahrzeuges zur Fahrt auf einem rauhen Gelände, die ein Grundglied (4), das durch den Teil des Fahrzeugrahmens gebildet ist, ein schwenkbares bewegliches Glied (2), das durch den Körper (21, 60) oder den unteren Arm (84) der Radaufhängung (3) gebildet ist, und eine spiralförmige Feder (11, 65, 71, 81) aufweist, **dadurch gekennzeichnet, dass** die Aufhängung eine kinematische Wälzpaarung aufweist, deren gesteuertes Glied (102) durch Zahnradkamm (17, 68, 102) oder Seil, Riemen oder Kette (74) gebildet ist, dessen Lauffläche mit der konvexen Lauffläche (5) des Steuergliedes (101) der kinematischen Wälzpaarung im Eingriff steht, das auf dem Grundglied (4) der Aufhängung (1, 6, 7, 8) des Rades (3) gelagert ist, wobei ein Ende der Feder (11, 65, 71, 81) mit dem beweglichen Glied (2) der Aufhängung (1, 6, 7, 8) des Rades (3) und das andere Ende der Feder (11, 65, 71, 81) mit dem gesteuerten Glied (102) der kinematischen Wälzpaarung verkoppelt sind.

2. Aufhängung nach dem Anspruch 1, **dadurch gekennzeichnet, dass** das Steuerglied (101) der kinematischen Wälzpaarung auf dem Grundglied (4) der Aufhängung fest gelagert ist.

3. Aufhängung nach dem Anspruch 1, **dadurch gekennzeichnet, dass** das Steuerglied (101) der kinematischen Wälzpaarung auf dem Grundglied (4) der Aufhängung beweglich gelagert ist.

4. Aufhängung nach dem Anspruch 3, **dadurch gekennzeichnet, dass** das Steuerglied (101) der kinematischen Wälzpaarung mit einem anderen Glied der Aufhängung (1, 6, 7, 8) des Rades (3) zum Hervorrufen seiner Bewegung in Bezug auf das Grundglied (4) der Aufhängung verkoppelt ist, auf dem das Steuerglied (101) gelagert ist.

5. Aufhängung nach dem Anspruch 3, **dadurch gekennzeichnet, dass** das Steuerglied (101) der kinematischen Wälzpaarung mit einem selbstständigen Antrieb verkoppelt ist, der dem Hervorrufen seiner Bewegung in Bezug auf das Grundglied (4) der Aufhängung dient, auf dem das Steuerglied (101) gelagert ist.

6. Aufhängung nach dem Anspruch 5, **dadurch gekennzeichnet, dass** der selbstständige Antrieb, der dem Hervorrufen der Bewegung des Steuergliedes (101) der kinematischen Wälzpaarung dient, durch das System der automatischen Steuerung der stabilisierten Lage der Teile des Fahrzeuges gesteuert ist, die mit dem Grundglied (4) verkoppelt sind.

7. Aufhängung nach einem der vorhergehenden Ansprüche, **dadurch gekennzeichnet, dass** das gesteuerte Glied (102) der kinematischen Wälzpaarung ein Zahnradkamm (17, 68, 88) ist, dessen Lauffläche mit der konvexen Lauffläche (5) des Steuergliedes (101) der kinematischen Wälzpaarung im Eingriff steht, wobei die konvexe Lauffläche (5) verzahnt ist.

8. Aufhängung nach einem der Ansprüche 1 bis 6, **dadurch gekennzeichnet, dass** das gesteuerte Glied (102) der kinematischen Wälzpaarung Seil, Riemen oder Kette (74) ist, dessen/deren Laufläche mit der konvexen Lauffläche (5) des Steuergliedes (101) der kinematischen Wälzpaarung im Eingriff steht, wobei die der konvexen Laufläche (5) entsprechende Form der Oberfläche der Form der Oberfläche entspricht, die der Laufläche des biegsamen Gliedes (74) entspricht und das biegsame Glied (74) mit seinem Ende zur konvexen Lauffläche (5) des Steuergliedes (101) befestigt ist.

9. Aufhängung nach dem Anspruch 7 oder 8, **dadurch gekennzeichnet, dass** die gegenseitige Tangentiallage der Lauffläche des gesteuerten Gliedes (102) der kinematischen Wälzpaarung und der konvexen Lauffläche (5) des Steuergliedes (101) der kinematischen Wälzpaarung durch eine lineare Führung (18, 46, 69) sichergestellt wird.

## Revendications

1. Suspension (1, 6, 7, 8) de la roue (3) d'un véhicule, notamment d'un véhicule pour la conduite dans le terrain cahoteux, comprenante l'élément de base (4) qui est formé par la partie du châssis du véhicule, l'élément mobile et balançant (2) formé par le corps (21, 60) ou par le bras inférieur (84) de la suspension de roue (3), et le ressort hélicoïdal (11, 65, 71, 81), **caractérisée en ce que** la suspension comprend un couple cinématique du roulement dont l'élément dirigé (102) est formé par la crémaillère (17, 68, 102) ou par la corde, la courroie ou la chaîne (74), dont la surface de roulement est en prise avec la surface de roulement convexe (5) de l'élément de commande (101) du couple cinématique du roulement, qui est monté sur l'élément de base (4) de la suspension (1, 6, 7, 8) de la roue (3), et en même temps l'une extrémité du ressort (11, 65, 71, 81) est couplée avec l'élément mobile (2) de la suspension (1, 6, 7, 8) de la roue (3) et la deuxième extrémité du ressort (11, 65, 71, 81) est couplée avec l'élément dirigé (102) du couple de roulement cinématique.

2. Suspension selon la revendication 1, **caractérisée en ce que** l'élément de commande (101) du couple du roulement cinématique est monté sur l'élément de base (4) de la suspension d'une manière fixe.

3. Suspension selon la revendication 1, **caractérisée en ce que** l'élément de commande (101) du couple du roulement cinématique est monté sur l'élément de base (4) de la suspension d'une manière mobile.

4. Suspension selon la revendication 3, **caractérisée en ce que** l'élément de commande (101) du couple du roulement cinématique est couplé avec un autre élément de la suspension (1, 6, 7, 8) de la roue (3) pour provoquer son mouvement par rapport à l'élément de base (4) de la suspension sur lequele l'élément de commande (101) est monté.

5. Suspension selon la revendication 3, **caractérisée en ce que** l'élément de commande (101) du couple du roulement cinématique est couplé avec l'entraînement individuel servant à provoquer son déplacement par rapport à l'élément de base (4) de la suspension, sur lequel l'élément de commande (101) est monté.

6. Suspension selon la revendication 5, **caractérisée en ce que** l'entraînement individuel servant à générer un mouvement de l'élément de commande (101) est commandé par un système de contrôle automatique de la position stabilisée des pièces du véhicule couplées à l'élément de base (4).

7. Suspension selon l'une quelconque des revendications précédentes, **caractérisée en ce que** l'élément dirigé (102) du couple du roulement cinématique est la crémaillère (17, 68, 102), dont la surface de roulement est en prise avec une surface de roulement convexe (5) de l'élément do commande (101) du couple du roulement cinématique et en même temps la surface de roulement convexe (5) est dentée.

8. Suspension selon l'une quelconque des revendications 1 à 6, **caractérisée en ce que** l'élément dirigé (102) du couple du roulement cinématique est la corde, la courroie ou la chaîne (74), dont la surface de roulement est en prise avec une surface de roulement convexe (5) de l'élément de commande (101) du couple du roulement cinématique, et en même temps la forme de la surface appartenante à la surface de roulement convexe respective (5) correspond à la forme de la surface appartenante à la surface de roulement convexe de l'élément flexible (74) et l'élément flexible (74) est fixé par son extrémité à la surface de roulement convexe (5) de l'élément de commande (101).

9. Suspension selon la revendication 7 ou 8, **caractérisée en ce que** la position de la tangence mutuelle de la surface de roulement de l'élément dirigé (102) du couple du roulement cinématique et de la surface de roulement convexe (5) de l'élément de commande (101) du couple du roulement cinématique assure le guidage linéaire (18, 46, 69).
